# EUROPÄISCHE PATENTSCHRIFT

(11) **EP 0 270 797 B1**
(45) Veröffentlichungstag und Bekanntmachung des Hinweises auf die Patenterteilung: **07.01.1993**
(21) Anmeldenummer: 87115641.0
(22) Anmeldetag: 24.10.1987
(51) Int. Cl.: C04B 40/02

(54) **Verfahren und Vorrichtung zur Herstellung plattenförmiger Bauelemente aus Calciumsilikat**
Method and apparatus for producing panel-shaped calcium silicate building elements
Procédé et dispositif de fabrication de panneaux de construction en silicate de calcium

(30) Priorität: 06.12.1986 DE 3641823
(43) Veröffentlichungstag der Anmeldung: 15.06.1988
(73) Patentinhaber: CSP- Chemie Entwicklungsgesellschaft mbH, D-13355 Berlin (DE)
(72) Erfinder: Stellmach, Winfried, Dr.rer.nat., D-1000 Berlin 41 (DE)
(74) Vertreter: Rücker, Wolfgang

(56) Entgegenhaltungen:
- EP-A- 0 027 489
- DE-C- 699 003
- US-A- 1 932 971
- US-A- 2 699 097
- US-A- 3 778 494

## Beschreibung

Die Erfindung betrifft ein Verfahren und eine Vorrichtung zur Herstellung von plattenförmigen Baukörpern aus Calciumsilikat, insbesondere plattenförmige Bauelemente unterschiedlicher Dichte und Abmessungen, die hauptsächlich aus einer Calciumsilikatverbindung des Xonotlithtyps bestehen.

Calciumsilikatprodukte dieser Art sind an sich bekannt, beispielsweise aus der DE-OS 33 02 729. Das Xonotlithcalciumsilikat (CaO.SiO₂.H₂O) besitzt einen geringen linearen thermischen Ausdehnungskoeffizienten und weist eine ausgezeichnete Wärmebeständigkeit auf. Es wird vielfach als Wärmeisolator oder als flammenhemmendes Material im Bau eingesetzt. Die Herstellung erfolgt unter Verwendung einer kieselsäurehaltigen Substanz und Kalk, entweder im gelöschten oder ungelöschten Zustand in wäßriger Aufschlämmung, wobei das Verhältnis CaO/SiO₂ zwischen 0,8 : 1 bzw. 1,2 : 1 liegt. Diese wäßrige Aufschlämmung wird in einer Filterpresse verformt und entwässert und später dampfgehärtet und getrocknet. Das kieselsäurehaltige Material, was zur Verwendung kommt, ist beispielsweise gemahlener Quarzit oder Quarzit in Mischung mit gefällter Kieselsäure,und Calciumoxidoder Calciumhydroxid bilden die calciumhaltige andere Komponente.

Es ist bekannt, durch die Wahl des Molverhältnisses der kalkhaltigen Verbindung mit der kieselsäurehaltigen Verbindung das Verfahren so zu steuern, daß sich hauptsächlich Xonotlith bildet.

Es ist ferner bekannt, dieses Gemisch aus kieselsäurehaltigen Stoffen und Kalk oder Calciumhydroxid bei Temperaturen zwischen 150 und 230°C, insbesondere zwischen 160 und 210°C, über eine längere Verweilzeit hin zur Reaktion zu bringen, damit sich ein entsprechendes Calciumsilikat bildet, dem im weiteren Verlauf faserförmige Bestandteile, wie Asbest, Steinwolle, Glasfasern oder dgl., zugesetzt werden können.

Es ist auch bekannt, die Dichte desgeformten Produkts durch Druckanwendung in der formgebenden Maschine zu steuern.

Aus der DE-PS 28 32 125 ist ebenfalls ein Verfahren zur Herstellung von Calciumsilikatmassen durch Umsetzen von amorphem und kristallinem Siliziumdioxid bzw. diese Stoffe enthaltenden Materialien mit Calciumoxid bekannt im Molverhältnis von 0,8:1 bis 1,1:1 unter Zusatz von synthetisch hergestelltem Calciumsilikatgranulat, dem die Aufgabe unterliegt, ein Produkt besonderer Festigkeit und Homogenität zu schaffen, indem man die Vorreaktion zwischen den beiden Komponenten zur Erzeugung eines beständigen Gels vor dem Formen und ohne Wärmeanwendung für eine Zeitspanne von mindestens fünf Stunden bei der Herstellung von Produkten mit einer Rohdichte von 800 kg/m³ und bis mindestens zwölf Stunden im Falle der Herstellung eines Produktes mit einer Rohdichte von 160 kg/m³ verweilen läßt. Calciumsilikatprodukte dieser Art sind ferner noch beschrieben in der DE-OS 27 51 660 und in der US-PS 33 52 699.

Obwohl in der DE-PS 28 32 125 eine Vielzahl von Literaturstellen genannt sind und obwohl die Gelbildung besonders herausgestellt ist in Verbindung mit der Verweilzeit und der Dichte des herzustellenden Formkörpers, ist beispielsweise aus Beispiel 1 zu entnehmen, daß das Reaktionsgemisch mit den eingearbeiteten Fasern in einen Dosierbehälter gepumpt wird, von welchem es einer Filterpressenform zufließt, die dann den Formkörper preßt. Die von den Erfindern dieser Patentschrift ersonnene Verweilzeit findet dabei in dem sogenannten Reaktionsbehälter statt, aus dem dann das Reaktionsgemisch mit seinen Bestandteilen, wie Fasern der verschiedensten Art und Form der Filterpresse zugeführt wird.

Die restlichen Beispiele erwähnen dann ebenfalls nur eine Reaktionszeit, nach Beispiel 2 von sechs Stunden, nach Beispiel 3 von fünf Stunden. In der Zeichnung sind diese Reaktionsbehälter dargestellt.

Die Gelbildung ist ein wichtiger Abschnitt in der Herstellung des Calciumsilikatformkörpers bzw. in der Bildung der Kristallstruktur.

Die exotherme Reaktion zwischen den Komponenten des Reaktionsgemisches und die parallel dazu ablaufende Gelbildung sollte möglichst ungestört vonstatten gehen. Der Umstand aber, daß nach der DE-PS 28 32 125 die Gelbildung in sogenannten Reaktionsbehältern vonstatten geht, aus denen das Produkt wiederum durch Umpumpen in die eigentliche Form geleitet wird, führt jedoch nicht zu optimalen Ergebnissen, insbesondere nicht bei der Steuerung der Dichten und der mechanischen Parameter der Platte.

Aufgabe der vorliegenden Erfindung ist es daher, die Gelbildung im Reaktionsablauf zwischen den Komponenten zur Herstellung des Calciumsilikathydrats möglichst ungestört verweilen zu lassen, d.h. ohne daß durch Umfüllen, Umpumpen oder dgl. dem Reaktionsgemisch Energie zugeführt wird. Auf das Gemenge soll erfindungsgemäß nicht mechanisch eingewirkt werden, sondern es soll nach der Homogenisierung und Konditionierung mit den ggf. beigemischten inerten Zusatzstoffen in einer Situation verweilen, in der diese Gelbildung ungestört stattfindet, damit Rohdichten in weiten Bereichen bis herab zu sehr leichten Produkten bis etwa 50 kg/m³ in kurzer Zeit herstellbar sind.

Erreicht wird das dadurch, daß die Gelbildung des wäßrigen Gemisches der Reaktionspartner für die Calciumsilikathydratbildung auf einer sich kontinuierlich fortbewegenden, wasserdurchlässigen Unterlage erfolgt, wobei das Reaktionsgemisch schon die Gestalt des gewünschten Endprodukts erhält, und daß das Gemenge auf eine wasserundurchlässige Unterlage überführt wird, wenn der Wassergehalt so gering ist, daß er im räumlichen Netzwerk des Gels weitgehend gebunden ist, sodann auf die gewünschte Dicke gepreßt, dabei kalibriert, entwässert und anschließend dampfgehärtet und getrocknet wird.

Das heißt mit anderen Worten, wenn es um die Herstellung einer Platte bestimmter Abmessungen geht, dann wird das Reaktionsprodukt bereits in die Gestalt dieser Platte mit ihren Abmessungen gebracht mit Ausnahme der Dicke der Platte. In dieser Gestalt und Form verweilt das Calciumsilikathydrat eine entsprechende Zeitspanne, wird anschließend der Filterpresse zugeführt, auf die gewünschte Dicke und Dichte verdichtet, dabei durch Preßdruck bzw. Vakuum auf beiden Flächen entwässert und schließlich vermittels einer Hordenplatte in einen Hordenwagen oder dgl. Einrichtung überführt, in welchem sich ein bestimmter Stapel von Platten mit einem gewissen freien Raum zwischen jeder Platte befindet und diese in einen Autoklaven überführt, darin hydrothermal gehärtet und schließlich nach Abschluß des Härtungsvorganges einem Trockner zugeführt und auf die gewünschte Restfeuchte getrocknet.

Erfindungsgemäß wird das Gemenge, welches die Reaktionspartner zur Bildung des Calciumsilikathydrats enthält, auf ein Förderband gegeben, welches wasserdurchlässig ist und z. B. ein Filtersiebband ist und das eine entsprechende Länge besitzt und in seiner Geschwindigkeit einstellbar ist. Das Förderband erstreckt sich bis unter die formgebende und kalibrierende Filterpesse hindurch. Die seitliche Begrenzung des Förderbandes, die ein Herabfließen des Gemenges verhindert, wird aus feststehenden Begrenzungsplatten oder Plattenstreifen gebildet, an denen das Förderband dichtend entlangläuft oder ebenfalls aus endlosen Förderbändern mit Stützrollen, bei denen die Flächen des Obertrums senkrecht zur Förderrichtung beiderseits des Förderbandes stehen.

Durch Bemessung der Länge einer solchen Vorlaufstrecke, auf welchem die Gelbildung des Gemenges vonstatten geht als auch durch Regelung der Geschwindigkeit des Förderbandes wird die gewünschte Verweilzeit erreicht.

Die aus dem Trockner kommenden Platten werden schließlich gestapelt und auf Paletten verpackt und der Verarbeitung zugeführt. Es hat sich gezeigt, daß diese Verfahrensweise optimale Ergebnisse hinsichtlich einer gleichmäßigen Homogenität über den Querschnitt der Platte ergibt. Überraschenderweise hat sich bei der erfindungsgemäßen Herstellung der Platten gezeigt, daß Verweilzeiten von mehr als 1 bis 2 Stunden nicht erforderlich sind. In den meisten Fällen (je nach Rohdichte) sind Verweilzeiten von weniger als 30 minuten ausreichend. Die durchschnittlichen Parameter, gemessen in N/mm², ergeben sehr gute Werte für eine Platte mit einer Rohdichte von 200 kg/m³ unter Verwendung der folgenden Ausgangsstoffe:

| | |
|---|---|
| 30 Gew.-% | Quarzmehl, feingemahlen, |
| 12 Gew.-% | amorphe Kieselsäure, berechnet als SiO₂, |
| 38 Gew.-% | Weißkalk, handelsüblich, |
| 13 Gew.-% | Calciumsilikat, feingemahlen, |
| 4 Gew.-% | Zellulosefasern und |
| 3 Gew.-% | alkalibeständige Glasfasern. |

Die 12 Gew.-% amorphe Kieselsäure können ganz oder teilweise durch Wasserglas ersetzt sein. Ebenso können statt der Zellulosefasern nur Glasfasern oder Steinwolle zugesetzt oder die Mengenanteile entsprechend variiert werden. Dieses Gemisch wird mit Wasser in einer solchen Menge vermischt, daß sich eine gut fließ- und pumpfähige Masse ergibt. Das ist für das vorliegende Beispiel etwa das sechsfache des Gewichts der festen Bestandteile.

Auch die dem Stande der Technik gegenüber deutlich geringere erforderliche Anmachwassermenge wird durch das Verfahren ermöglicht, so daß auch wesentlich weniger Überschusswasser wieder entfernt werden muß, was gleichzeitig eine Einsparung an Rohstoff, Energie und Umweltbelastung bedeutet. Bei höheren Rohdichten ist sogar eine noch stärkere Verringerung des Wasseranteils möglich z.B. bei 800 kg/m³ weniger als das Zweifache.

Die durchschnittlichen Parameter dieser Leichtbauplatte stellten sich wie folgt dar:

| | |
|---|---|
| Druckfestigkeit | 3,9 N/mm² |
| Biegefestigkeit | 1,3 N/mm² |
| Schwindung bei 750°C in % | 1,0 |
| Schwindung bei 1000°C in % | 1,2 |
| Wärmeleitzahl in W/mK | 0,102 |

Die Vorrichtungen zur Durchführung des Verfahrens werden nun anhand von Ausführungsbeispielen unter Bezugnahme auf die beigefügte Zeichnung näher erläutert.

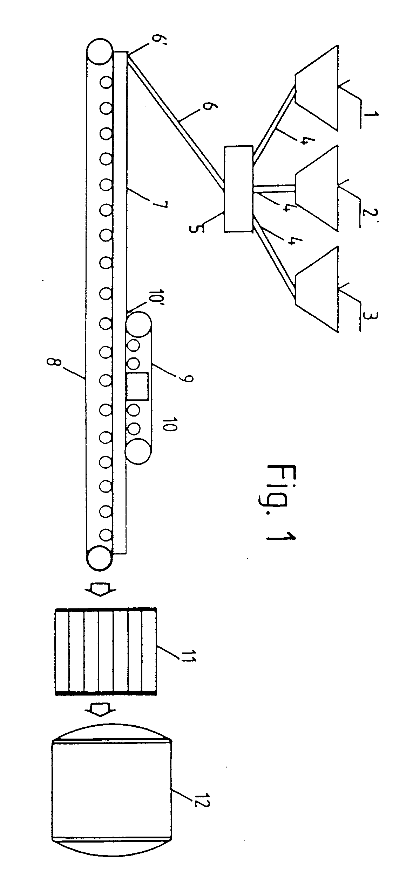

- Fig. 1: zeigt schematisch eine Ausführungsform einer Vorrichtung zur Herstellung von Calciumsilikathydratplatten mit einer integrierten Verweilstrecke.

Wie hinreichend bekannt, werden die entsprechenden Ausgangsstoffe für die aus Calciumsilikathydrat bestehenden plattenförmigen Bauelemente in Vorratssilos zur Verfügung gestellt, die in Fig. 1 mit den Bezugszeichen 1,2 und 3 bezeichnet sind. So kann beispielsweise das Silo 1 das kieselsäurehaltige Material enthalten, entweder ein einheitliches Material oder ein Gemisch unterschiedlicher kieselsäurehaltiger Stoffe oder Verbindungen in einer dem Verwendungszweck entsprechend zerkleinerten Form, wobei die Zerkleinerung auch abgestimmt sein kann auf die Gelbildungsaktivität hinsichtlich Zeit, C/S- Verhältnis und der bei der Reaktion sich entwickelnden Wärme sowie der erforderlichen Härtungszeit.

Das Silo 2 könnte die kalkhaltigen Komponenten enthalten, ebenfalls entweder einheitlicher oder gemischter Art, wie das eingangs der Anmeldung dargestellt und dem Beispiel zu entnehmen ist, beispielsweise ein Gemisch aus Weißkalk, Weißfeinkalk und/oder Kalkhydrat und noch anderen Stoffen oder nur Weißkalk, während das Silo 3 jetzt inerte Bestandteile enthält, beispielsweise alkalibeständige Glasfaserabschnitte entsprechender Länge und Stärke oder ein Gemisch aus Glasfasern und Zellulosefasern, welch letztere ebenfalls entsprechend vor- und aufbereitet sind oder Gesteinsfasern und dgl. mehr.

Falls gewünscht und für die herzustellenden Platten erforderlich, können weitere in der Zeichnung nicht dargestellte Silos vorgesehen sein, die weitere Bestandteile enthalten oder die Bestandteile enthalten, die in anderen Fällen zusammen mit anderen Bestandteilen in einem Silo gemischt enthalten sind, falls aus besonderen Gründen der Rationalsierung oder der technischen oder chemischen Zweckmäßigkeit getrennte Partienvorgemischt werden, die dann mit anderen Partien der endgültigen Charge in einem weiteren Mischvorgang eingebaut werden.

Diese Anordnung unterschiedlicher Silos bzw. der Vorratshaltung richtet sich nach den jeweiligen Umständen und dem Betrieb, der abgewickelt wird.

Nicht dargestellt in Fig. 1 ist die Zuführung des Wassers. Dieses geschieht über eine Leitung von eigenen Brunnen oder eigenem Versorgungsnetz und kann durch entsprechende Einrichtungen chargiert werden, vorzugsweise in den mit 5 bezeichneten Mischer, in welchem die Bestandteile, aus denen die Platte gebildet wird, gemischt werden. Der Mischer, bei dem es sich um einen üblichen, für solche Zwecke gebräuchlichen Mischer handelt, gibt sein Mischgut, das oben auch als Gemenge bezeichnet ist, in Form einer relativ dünnflüssigen breiigen Masse mit großem Wassergehalt auf das obere Trum eines Förderbandes 8 ab, so daß sich bei der Bewegung des Förderbandes in Richtung nach rechts unter Bezugnahme auf die Zeichnung eine entsprechende dicke Schicht absetzt. Diese ist in Fig. 1 mit dem Bezugszeichen 7 versehen.

Das Förderband ist entweder so lang oder auf eine solche Geschwindigkeit eingestellt, daß sich die gewünschte Verweilzeit ergibt, bis die Masse, aus der die Platte gepreßt und dabei entwässert wird, in die Bandfilterpresse 10 einläuft.

Das den Preßdruck ausübende Element in der Presse ist ebenfalls ein kontinuierlich umlaufendes Band, welches das Bezugszeichen 9 trägt. Es ist aus diesem Beispiel einer Vorrichtung deutlich zu erkennen, daß die gesamte Strecke von der Gemischaufgabe bei 6ʹ bis zum Einlauf in die Presse bei 10ʹ eine Zone oder einen Abschnitt der Vorreaktion darstellt, in welchem die Bestandteile zur Herstellung der Platte miteinander reagieren und ungestört, was außerordentlich wichtig für Eigenschaften und Rohdichte der Platte ist, verweilen und das Gel sich bildet.

Nach Durchgang der Masse durch die Presse 10 wird der kontinuierliche Plattenstrang in entsprechende Stücke durch eine installierte Schneidvorrichtung aufgeteilt, in einen Hordenwagen 11 überführt und schließlich in einen Autoklaven zur hydrothermalen Ausreaktion gebracht und nach der erforderlichen Reaktionszeit wieder entnommen, getrocknet und gelagert.

## Patentansprüche

1. Verfahren zur Herstellung von plattenförmigen Bauelementen aus Calciumsilikathydratmassen durch Umsetzen von Siliziumdioxid bzw. solches enthaltenden Verbindungen und Materialien in Gegenwart von Wasser und Entwässern dieser Massen während des Formens des Bauelementes und Autoklavenhärtung und Trocknung, **dadurch gekennzeichnet**, daß die Gelbildung des wäßrigen Gemisches der Reaktionspartner für die Calciumsilikathydratbildung auf einer sich kontinuierlich fortbewegenden, wasserdurchlässigen Unterlage erfolgt, wobei das Reaktionsgemisch schon die Gestalt des gewünschten Endprodukts erhält, und daß das Gemenge auf eine wasserundurchlässige Unterlage überführt wird, wenn der Wassergehalt so gering ist, daß er im räumlichen Netzwerk des Gels weitgehend gebunden ist, sodann auf die gewünschte Dicke gepreßt, dabei kalibriert, entwässert und anschließend dampfgehärtet und getrocknet wird.

## Claims

1. Method of producing panel-shaped building elements of calcium silicate hydrate masses by reaction of silicon dioxide or compounds containing same and materials in the presence of water and by draining of these masses during the forming of the building element and autoclave hardening and drying, characterized in that the gel formation of the aqueous mixture of the reaction partners for the calcium silicate hydrate formation takes place on a continually forwardly moving, water-permeable support, the reaction mixture already receiving the form of the desired end product, and that the mixture is transferred onto a water-impermeable support when the water content is sufficiently low for it to be largely combined in the spatial network of the gel, and then is pressed to the desired thickness, calibrated, drained and finally steam-hardened and dried.

## Revendications

1. Procédé de fabrication d'éléments de construction en forme de panneaux constitués de masses de silicate de calcium hydraté, en faisant réagir du dioxyde de silicium ou des composés et des matériaux contenant ce composé en présence d'eau et en déshydratant ces masses pendant la mise en forme des éléments de construction en effectuant ensuite un durcissement en autoclave et un séchage, caractérisé en ce que la formation du gel du mélange aqueux des réactifs pour la formation du silicate de calcium hydraté est réalisée sur un support perméable à l'eau et se déplaçant en continu, tandis que le mélange réactionnel reçoit déjà la forme du produit final souhaité et que le mélange est amené sur un support imperméable à l'eau lorsque la teneur en eau est suffisamment faible pour qu'elle soit liée dans une large mesure au réseau spatial du gel, les produits étant ensuite comprimés jusqu'à la densité souhaitée en les calibrant et en les déshydratant tandis qu'ils subissent ensuite un durcissement à la vapeur et un séchage.
